# EUROPEAN PATENT SPECIFICATION

(11) **EP 2 935 829 B1**
(45) Date of publication and mention of the grant of the patent: **27.03.2019**
(21) Application number: 13864369.7
(22) Date of filing: 04.12.2013
(51) Int. Cl.: F02C 3/00, F02C 7/22, F02C 7/236, F02C 7/232

(54) **FUEL SYSTEM**
BRENNSTOFFSYSTEM
SYSTÈME DE CARBURANT

(30) Priority: 21.12.2012 US 201213725026
(43) Date of publication of application: 28.10.2015
(73) Proprietor: United Technologies Corporation, Farmington, CT 06032 (US)
(72) Inventor: RIPLEY, David, Lloyd, San Diego, CA 92117 (US)
(74) Representative: Dehns
(86) International application number: PCT/US2013/072992
(87) International publication number: WO 2014/099364

(56) References cited:
- WO-A1-2012/080334
- US-A- 5 630 399
- US-A1- 2004 211 395
- US-A1- 2004 211 395
- US-A1- 2005 205 065
- US-A1- 2006 266 047
- US-A1- 2006 266 047
- US-A1- 2007 044 768
- US-A1- 2010 293 919
- US-A1- 2012 219 429
- US-A1- 2013 192 679
- US-B2- 7 044 110

## Description

### Field of the Disclosure

The present disclosure relates generally to gas turbine engines and, more particularly, to fuel systems for gas turbine engines.

### Background of the Disclosure

Large commercial aircraft typically include on-board auxiliary power units (APUs) to provide electrical, hydraulic, or pneumatic power for systems throughout the aircraft. APUs typically comprise gas turbine engines having a compressor and a turbine, between which a combustor burns fuel. Through a gearbox or direct drive, the turbine provides mechanical input to an electrical generator, while compressed air bled from the compressor may be used to supply various environmental controls. For example, when an aircraft is on the ground, the primary propulsion engines of the aircraft are typically shut down, and in this case the APU provides the main source of power for a variety of systems, such as the environmental control systems, hydraulic pumps, electrical systems, and main engine starters. The APU may also provide power during in-flight operations, such as for electrical and pneumatic systems.

Fuel is sent to the combustion section of an APU by one or more fuel pumps. Gear type fuel pumps are commonly used, and include spur gears mounted on pump bearings. If there is greater pressure at the inlet of the fuel pump than at the outlet of the fuel pump, certain parts of the fuel pump may experience damage. For example, if there is greater inlet pressure than discharge pressure, the pump bearings may unload, thereby causing the spur gears to shift and damage the bearings. Accordingly, there exists a need to for a way to protect the fuel pump of an APU when the inlet pressure is greater than the discharge pressure.

US 2004/0211395 A1 discloses an electronic control system for fuel system priming. US 5630399 B discloses a fuel injection system employing vane type fuel pump.

US 7044110 B2 discloses a fuel injection device for a combustion engine.

### Summary of the Disclosure

According to one aspect of the present inventon, a fuel system is disclosed as claimed in claim 1.

In a refinement, the bypass valve may open when fuel pressure at the inlet of the fuel pump is greater than fuel pressure at the outlet of the fuel pump.

In a related refinement, the first end of the bypass conduit may be fluidly connected downstream of the electric fuel pump.

In a related refinement, the fuel system may further comprise a fuel metering unit for managing the fuel flow to the engine, the fuel metering unit may be located on the fuel supply conduit downstream of the mechanical fuel pump.

In a related refinement, the second end of the bypass conduit may be fluidly connected upstream of the fuel metering unit.

In another refinement, the bypass valve may protect the fuel pump from damage caused by fuel pressure at the inlet of the fuel pump being greater than fuel pressure at the outlet of the fuel pump.

In another refinement, the bypass valve may prevent reverse pressurization of the fuel pump.

In yet another refinement, the bypass valve may remain closed when the fuel pressure at the outlet of the fuel pump is greater than or equal to the fuel pressure at the inlet of the fuel pump.

According to another aspect of the present invention, an engine is disclosed as claimed in claim 9.

In a refinement, the bypass valve may open when a fuel pressure upstream of the fuel pump is greater than a fuel pressure downstream of the fuel pump.

In a refinement, the fuel supply conduit may fluidly connect the fuel supply, the fuel pump and the combustor section in series, and wherein the bypass conduit is fluidly connected to the fuel supply conduit.

In a related refinement, the fuel pump may be a mechanical fuel pump, the fuel system may further comprise an electric fuel pump located on the fuel supply conduit downstream of the fuel supply and upstream of the mechanical fuel pump.

In a related refinement, the electric fuel pump may be located upstream of the bypass conduit.

In a related refinement, the fuel system may further include a relief conduit fluidly connected to the fuel supply conduit, the relief conduit including an inlet downstream of the mechanical fuel pump and an outlet upstream of the mechanical fuel pump, and a relief valve inserted in the relief conduit, the relief valve that when open allows fuel to flow from the inlet to the outlet of the relief conduit.

In a related refinement, the fuel system may further include a fuel metering unit for managing the fuel flow to the combustor section, the fuel metering unit located on the fuel supply conduit downstream of the mechanical fuel pump.

In another refinement, the bypass valve may remain closed when a fuel pressure downstream of the fuel pump is greater than or equal to a fuel pressure upstream of the fuel pump.

According to yet another aspect of the present invention, a method for preventing damage to a mechanical fuel pump of an engine is disclosed as claimed in claim 12.

These and other aspects and features of the disclosure will become more readily apparent upon reading the following detailed description when taken in conjunction with the accompanying drawings. Although various features are disclosed in relation to specific exemplary embodiments of the invention, it is understood that the various features may be combined with each other, or used alone, with any of the various exemplary embodiments of the invention without departing from the scope of the invention.

### Brief Description of the Drawings

FIG. 1 is a schematic diagram of a fuel system according to an embodiment;
FIG. 2 is a flowchart outlining a method for preventing damage to a mechanical gear driven fuel pump, according to yet another embodiment;
FIG. 3 is a cross-sectional view of part of an engine according to an embodiment; and
FIG. 4 is a top schematic view of an auxiliary power unit within a tail section of an aircraft according to an embodiment.

While the present disclosure is susceptible to various modifications and alternative constructions, certain illustrative embodiments thereof, will be shown and described below in detail. It should be understood, however, that there is no intention to be limited to the specific embodiments disclosed, but on the contrary, the intention is to cover all modifications, alternative constructions, and equivalents falling within the scope of the present disclosure.

### Detailed Description

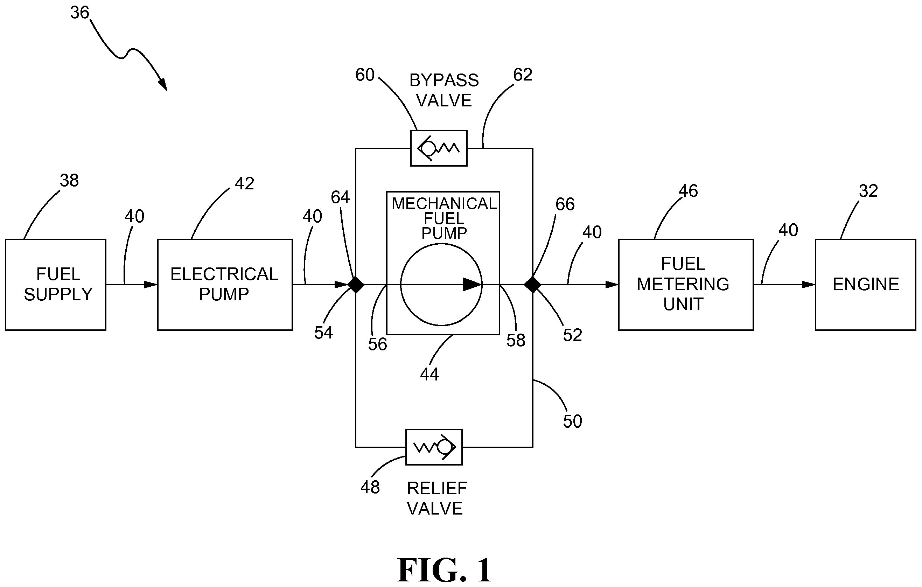

Referring now to the drawings, and with specific reference to FIG. 1, in accordance with the teachings of the disclosure, an exemplary fuel system 36 is shown. Fuel system 36 may include a fuel supply 38, fuel supply conduit 40, electric fuel pump 42, mechanical fuel pump 44, and fuel metering unit 46. Fuel system 36 provides fuel from the fuel supply 38 to an engine 32 for combustion. Fuel supply conduit 40 fluidly connects fuel supply 38 to a combustor section of the engine 32. For example, fuel supply conduit 40 may connect fuel supply 38, electric fuel pump 42, mechanical fuel pump 44, fuel metering unit 46, and engine 32 in flow series. More specifically, along fuel supply conduit 40, fuel metering unit 46 is located upstream of engine 32, mechanical fuel pump 44 is located upstream of fuel metering unit 46, electric fuel pump 42 is located upstream of mechanical fuel pump 44, and fuel supply 38 is located upstream of electric fuel pump 42. It is to be understood that fuel system 36 is presented in a simplified form and can additionally include controllers, boost pumps, filters, heat exchangers, and/or other components.

Mechanical fuel pump 44 may comprise a gear-driven fuel pump that pumps fuel from fuel supply 38 to fuel metering unit 46, which then manages and provides the desired fuel flow to engine 32. Electric fuel pump 42 may comprise an electric motor-driven fuel pump added in series with and located upstream of the mechanical fuel pump 44 to supplement fuel flow when mechanical fuel pump 44 is operating at low rotational speeds, such as during engine starting. A relief valve 48 located on a relief conduit 50 having an inlet or first end 52 and an outlet or second end 54 may be added to fuel system 36.

More specifically, relief conduit 50 connects fuel supply conduit 40 downstream of mechanical fuel pump 44 to fuel supply conduit 40 upstream of mechanical fuel pump 44. The first end 52 of relief conduit 50 may be fluidly connected to fuel supply conduit 40 at a location downstream of mechanical fuel pump 44 and upstream of fuel metering unit 46, and the second end 54 of relief conduit 50 may be fluidly connected to fuel supply conduit 40 at a location upstream of mechanical fuel pump 44 and downstream of electric fuel pump 42. Relief valve 48 remains closed when a pressure differential across mechanical fuel pump 44 is relatively low, and opens if the pressure differential across mechanical fuel pump 44 reaches a predetermined set point. When the relief valve 48 is open, fuel flows from the first end 52 of relief conduit 50 to the second end 54 of relief conduit 50. In so doing, fuel may be recirculated from an outlet 58 of mechanical fuel pump 44 to an inlet 56 of mechanical fuel pump 44 and back through mechanical fuel pump 44 in order to prevent over-pressurization of the fuel system 36.

In addition, a bypass valve 60 located on a bypass conduit 62 having an inlet or first end 64 and an outlet or second end 66 may be added to fuel system 36. Bypass conduit 62 fluidly connects fuel supply conduit 40 upstream of mechanical fuel pump 44 to fuel supply conduit 40 downstream of mechanical fuel pump 44. More specifically, the first end 64 of bypass conduit 62 may be fluidly connected to fuel supply conduit 40 at a location upstream of mechanical fuel pump 44 and downstream of electric fuel pump 42, such as a location near the inlet 56 of mechanical fuel pump 44. The second end 66 of bypass conduit 62 may be fluidly connected to fuel supply conduit 40 at a location downstream of mechanical fuel pump 44 and upstream of fuel metering unit 46, such as a location near the outlet 58 of mechanical fuel pump 44.

Bypass valve 60 may be a passive pressure valve, such as a ball and spring, check valve, etc., that remains closed when the pressure at the outlet 58 of mechanical fuel pump 44 is greater than or equal to the pressure at the inlet 56 of mechanical fuel pump 44. When the pressure at the inlet 56 of mechanical fuel pump 44 is greater than the pressure at the outlet 58 of mechanical fuel pump 44, bypass valve 60 opens to allow fuel to flow from the first end 64 of bypass conduit 62 through the bypass conduit 62 and through bypass valve 60 to the second end 66 of bypass conduit. Thus, when the pressure differential across bypass valve 60 causes bypass valve 60 to open, fuel will bypass mechanical fuel pump 44, thereby preventing reverse pressurization of mechanical fuel pump 14 and protecting mechanical fuel pump 44 from damage caused by greater pressure at the inlet 56 than at the outlet 58 of mechanical fuel pump 44.

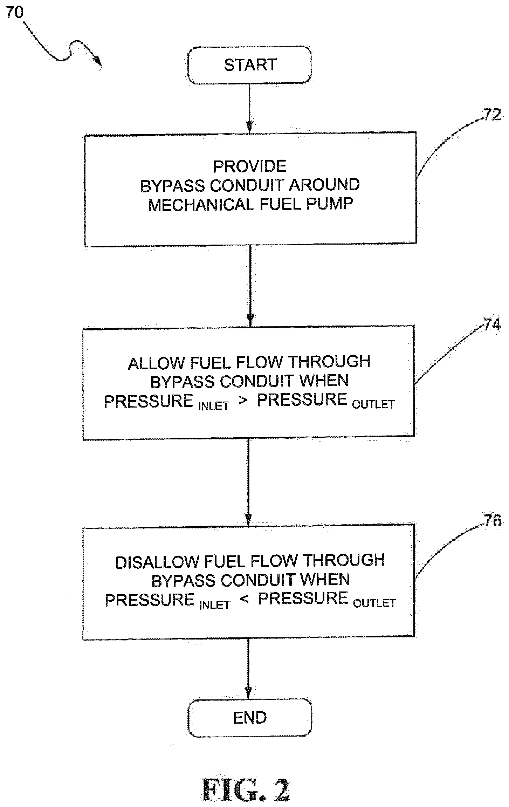

Turning now to FIG. 2, with continued reference to FIG. 1, a process flow outlining a method 70 for preventing damage to a mechanical gear driven fuel pump of an engine, according to another embodiment of the present disclosure, is shown. At block 72, bypass conduit 62 may be provided around mechanical fuel pump 44. At block 74, fuel flow may be allowed through bypass conduit 62 when pressure at the inlet 56 of mechanical fuel pump 44 is greater than pressure at the outlet 58 of mechanical fuel pump 44. At block 76, fuel flow may be disallowed through bypass conduit 62 when pressure at the inlet 56 of mechanical fuel pump 44 is less than pressure at the outlet 58 of mechanical fuel pump 44.

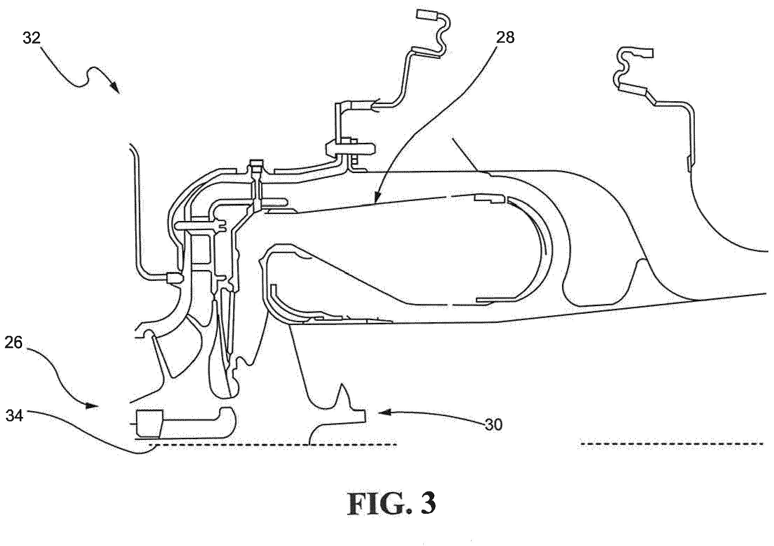

Referring now to FIG. 3, a cross-sectional view of part of the engine 32 is shown. Engine 32 may generally include a compressor section 26 where air is pressurized, a combustor section 28 downstream of the compressor section which mixes and ignites the compressed air with fuel and thereby generates hot combustion gases, and a turbine section 30 downstream of the combustor 26 for extracting power from the hot combustion gases. Compressor section 26, combustor section 28, and turbine section 30 comprise may operate to provide mechanical input via shaft 34 to various components, such as an electrical generator. The fuel system 36 of FIGS. 1-2 may be used to deliver fuel to the combustor section 28 of the engine 32.

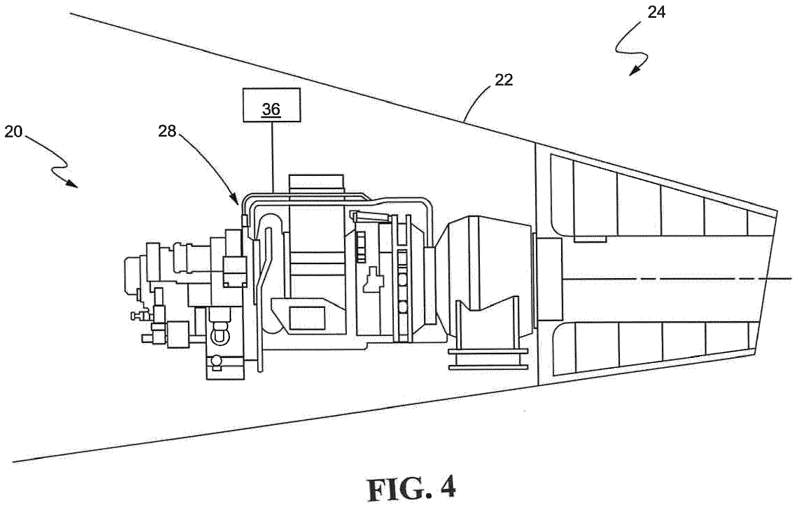

Referring now to FIG. 4, a top schematic view of an auxiliary power unit (APU) 20 within an exterior structure 22 of a tail section 24 of an aircraft is shown. The fuel system 36 of FIGS. 1-2 may also be used to deliver fuel to the combustor section 28 of the APU 20. It will be understood that although shown and described as being used with the APU 20, fuel system 36 may be used with any different type of engine without departing from the scope of this disclosure.

### Industrial Applicability

From the foregoing, it can be seen that the teachings of this disclosure can find industrial application, technical effects and benefits in any number of different situations, including but not limited to, preventing damage to fuel systems of gas turbine engines and auxiliary power units. Such engines may be used, for example, on aircraft for generating thrust, or in land, marine, or aircraft applications for generating power.

The disclosure described provides a bypass valve and bypass conduit around a mechanical fuel pump for a fuel system. By incorporating a bypass valve and bypass conduit into the fuel system around the mechanical fuel pump, the bypass valve and conduit prevent the pump inlet pressure from exceeding the pump outlet pressure, thereby protecting the mechanical fuel pump from damage that may be caused when inlet pressure is greater than outlet pressure.

More specifically, when there is greater inlet pressure than outlet pressure, the bypass valve opens and allows fuel to flow through the bypass conduit instead of flowing through the mechanical fuel pump. This allows fuel to bypass the mechanical gear-driven fuel pump instead of entering the pump, thereby preventing reverse pressurization of the fuel pump and protecting the pump from damage that may be caused by the bearings unloading and spur gears shifting when there is higher inlet pressure than outlet pressure.

## Claims

1. A fuel system, comprising:
a fuel supply (38);
a fuel supply conduit (40) fluidly connecting the fuel supply (38) to an engine (32);
a mechanical fuel pump (44) in fluid communication with the fuel supply conduit (40);
a bypass conduit (62) external to the mechanical fuel pump (44) including a first end (64) fluidly connected to the fuel supply conduit (40) upstream of and proximate to an inlet (56) of the mechanical the fuel pump (44), and a second end (66) fluidly connected to the fuel supply conduit (40) downstream of and proximate an outlet (58) of the mechanical fuel pump (44);
a bypass valve (60) located on the bypass conduit (62), the bypass valve (60) configured to allow fuel to flow only from the first end (64) to the second end (66) of the bypass conduit (62);
**characterised in that** said fuel system further comprises:
a relief conduit (50) external to the mechanical fuel pump (44) including a first end (52) fluidly connected to the fuel supply conduit (40) downstream of and proximate to the outlet (58) of the mechanical fuel pump (44), and a second end (54) fluidly connected to the fuel supply conduit (40) upstream of and proximate to the inlet (56) of the mechanical fuel pump (44);
a normally closed relief valve (48) located on the relief conduit (50), the relief valve (48) having an open configuration for allowing fuel to flow only from the first end (52) to the second end (54) of the relief conduit (50); and
an electric fuel pump (42), in fluid communication with the fuel supply conduit (40), upstream of the mechanical fuel pump (44) and downstream of the fuel supply (38), wherein the fuel supply (38), the electric fuel pump (42) and the mechanical fuel pump (44) are fluidly connected in series, and wherein the mechanical fuel pump (44), the bypass valve (60), and the relief valve (48) are fluidly connected in parallel.

2. The fuel system of claim 1, wherein the bypass valve (60) opens when fuel pressure at the inlet (56) of the fuel pump (44) is greater than fuel pressure at the outlet (58) of the fuel pump (44).

3. The fuel system of claim 1 or 2, wherein the first end (64) of the bypass conduit (62) is fluidly connected downstream of the electric fuel pump (42).

4. The fuel system of claim 3, further comprising a fuel metering unit (46) for managing the fuel flow to engine (32), the fuel metering unit (46) located on the fuel supply conduit (40) downstream of the mechanical fuel pump (44).

5. The fuel system of claim 4, wherein the second end (66) of the bypass conduit (62) is fluidly connected upstream of the fuel metering unit (46).

6. The fuel system of any preceding claim, wherein the bypass valve (60) protects the fuel pump (44) from damage caused by fuel pressure at the inlet (56) of the fuel pump (44) being greater than fuel pressure at the outlet (52) of the fuel pump (44).

7. The fuel system of any preceding claim, wherein the bypass valve (60) prevents reverse pressurization of the fuel pump (44).

8. The fuel system of any preceding claim, wherein the bypass valve (60) remains closed when the fuel pressure at the outlet (52) of the fuel pump (44) is greater than or equal to the fuel pressure at the inlet (56) of the fuel pump (44).

9. An engine, comprising the fuel system as claimed in any preceding claim, wherein:
the fuel pump (44) directs a fuel flow to a combustor section of the engine (32); and
the bypass conduit leads from a position upstream of the fuel pump to a position downstream of the fuel pump.

10. The engine of claim 9, wherein the fuel supply conduit (40) fluidly connects the fuel supply (38), the fuel pump (44) and the combustor section in series, and wherein the bypass conduit (62) is fluidly connected to the fuel supply conduit (40).

11. The engine of claim 9 or 10, wherein the bypass valve (60) remains closed when a fuel pressure downstream of the fuel pump (44) is greater than or equal to a fuel pressure upstream of the fuel pump (44).

12. A method for preventing damage to a mechanical fuel pump (44) of an engine, comprising:
fluidly connecting an electric fuel pump (42) to and upstream of the mechanical fuel pump (44) and fluidly connecting the electric fuel pump (42) to and downstream of a fuel supply (38);
fluidly connecting the mechanical fuel pump (44) upstream of and to a fuel metering unit (46);
fluidly connecting the fuel metering unit (46) to the engine;
providing a bypass conduit (62) external to the mechanical fuel pump (44) and in fluid communication with an inlet (56) and an outlet (58) of the mechanical fuel pump (44), the bypass conduit (62) being configured to lead from a proximate position upstream of the mechanical fuel pump (44) to a proximate position downstream of the fuel pump (44);
providing a one-way bypass valve (60) on the bypass conduit (62);
providing a relief conduit (50) external to the mechanical fuel pump (44) and in fluid communication with the inlet (56) and the outlet (58), the relief conduit (50) being configured to lead from a proximate position downstream of the fuel pump (44) to a proximate position upstream of the fuel pump (44);
providing a relief valve (48) on the relief conduit (50);
wherein the fuel supply (38), the electric fuel pump (42) and the mechanical fuel pump (44) are fluidly connected in series, and the mechanical fuel pump (44), the one-way bypass valve (60), and the one-way relief valve (48) are fluidly connected in parallel;
allowing fuel flow through the bypass conduit (62) when a fuel pressure at the inlet (56) of the fuel pump (44) is greater than a fuel pressure at the outlet (58) of the fuel pump (44);
allowing fuel flow through the relief conduit (50) when a fuel pressure differential between the inlet (56) and the outlet (58) of the mechanical fuel pump (44) is greater than a predetermined set point;
substantially preventing fuel flow through the bypass conduit (62) when the fuel pressure at the inlet (56) of the mechanical fuel pump (44) is less than the fuel pressure at the outlet (58) of the mechanical fuel pump (44); and
substantially preventing fuel flow through the relief conduit (62) when the fuel pressure at the outlet (58) of the fuel pump (44) is less than the fuel pressure at the inlet (56) of the fuel pump (44).

## Patentansprüche

1. Brennstoffsystem, umfassend:
eine Brennstoffversorgung (38);
eine Brennstoffversorgungsleitung (40), welche die Brennstoffversorgung (38) fluidisch mit einem Motor (32) verbindet;
eine mechanische Brennstoffpumpe (44) in Fluidkommunikation mit der Brennstoffversorgungsleitung (40);
eine Umgehungsleitung (62) außerhalb der mechanischen Brennstoffpumpe (44), die ein erstes Ende (64), das fluidisch mit der Brennstoffversorgungsleitung (40) stromaufwärts von und nahe einem Einlass (56) der mechanischen Brennstoffpumpe (44) verbunden ist, und ein zweites Ende (66) beinhaltet, das fluidisch mit der Brennstoffversorgungsleitung (40) stromabwärts von und nahe einem Auslass (58) der mechanischen Brennstoffpumpe (44) verbunden ist;
ein Umgehungsventil (60), das sich an der Umgehungsleitung (62) befindet, wobei das Umgehungsventil (60) zum Ermöglichen, dass Brennstoff nur von dem ersten Ende (64) zu dem zweiten Ende (66) der Umgehungsleitung (62) strömt, konfiguriert ist;
**dadurch gekennzeichnet, dass** das Brennstoffsystem ferner Folgendes umfasst:
eine Entlastungsleitung (50) außerhalb der mechanischen Brennstoffpumpe (44), die ein erstes Ende (52), das fluidisch mit der Brennstoffversorgungsleitung (40) stromabwärts von und nahe dem Auslass (58) der mechanischen Brennstoffpumpe (44) verbunden ist, und ein zweites Ende (54) beinhaltet, das fluidisch mit der Brennstoffversorgungsleitung (40) stromaufwärts von und nahe dem Einlass (56) der mechanischen Brennstoffpumpe (44) verbunden ist;
ein normalerweise geschlossenes Entlastungsventil (48), das sich an der Entlastungsleitung (50) befindet, wobei das Entlastungsventil (48) eine offene Konfiguration aufweist, um zu ermöglichen, dass Brennstoff nur von dem ersten Ende (52) zu dem zweiten Ende (54) der Entlastungsleitung (50) strömt; und
eine elektrische Brennstoffpumpe (42) in Fluidkommunikation mit der Brennstoffversorgungsleitung (40) stromaufwärts von der mechanischen Brennstoffpumpe (44) und stromabwärts von der Brennstoffversorgung (38), wobei die Brennstoffversorgung (38), die elektrische Brennstoffpumpe (42) und die mechanische Brennstoffpumpe (44) fluidisch in Reihe verbunden sind und wobei die mechanische Brennstoffpumpe (44), das Umgehungsventil (60) und das Entlastungsventil (48) fluidisch parallel verbunden sind.

2. Brennstoffsystem nach Anspruch 1, wobei sich das Umgehungsventil (60) öffnet, wenn der Brennstoffdruck an dem Einlass (56) der Brennstoffpumpe (44) größer als der Brennstoffdruck an dem Auslass (58) der Brennstoffpumpe (44) ist.

3. Brennstoffsystem nach Anspruch 1 oder 2, wobei das erste Ende (64) der Umgehungsleitung (62) fluidisch stromabwärts von der elektrischen Brennstoffpumpe (42) verbunden ist.

4. Brennstoffsystem nach Anspruch 3, ferner umfassend eine Brennstoffzumessungseinheit (46) zum Verwalten der Brennstoffströmung zum Motor (32), wobei sich die Brennstoffzumessungseinheit (46) an der Brennstoffversorgungsleitung (40) stromabwärts von der mechanischen Brennstoffpumpe (44) befindet.

5. Brennstoffsystem nach Anspruch 4, wobei das zweite Ende (66) der Umgehungsleitung (62) fluidisch stromaufwärts von der Brennstoffzumessungseinheit (46) verbunden ist.

6. Brennstoffsystem nach einem der vorhergehenden Ansprüche, wobei das Umgehungsventil (60) die Brennstoffpumpe (44) vor Schäden schützt, die dadurch verursacht werden, dass der Brennstoffdruck an dem Einlass (56) der Brennstoffpumpe (44) größer als der Brennstoffdruck an dem Auslass (52) der Brennstoffpumpe (44) ist.

7. Brennstoffsystem nach einem der vorhergehenden Ansprüche, wobei das Umgehungsventil (60) eine umgekehrte Druckbeaufschlagung der Brennstoffpumpe (44) verhindert.

8. Brennstoffsystem nach einem der vorhergehenden Ansprüche, wobei das Umgehungsventil (60) geschlossen bleibt, wenn der Brennstoffdruck an dem Auslass (52) der Brennstoffpumpe (44) größer als oder gleich dem Brennstoffdruck an dem Einlass (56) der Brennstoffpumpe (44) ist.

9. Motor, umfassend das Brennstoffsystem nach einem der vorhergehenden Ansprüche, wobei:
die Brennstoffpumpe (44) eine Brennstoffströmung zu einem Brennkammerabschnitt des Motors (32) leitet; und
die Umgehungsleitung von einer Position stromaufwärts von der Brennstoffpumpe zu einer Position stromabwärts von der Brennstoffpumpe führt.

10. Motor nach Anspruch 9, wobei die Brennstoffversorgungsleitung (40) fluidisch die Brennstoffversorgung (38), die Brennstoffpumpe (44) und den Brennkammerabschnitt in Reihe verbindet und wobei die Umgehungsleitung (62) fluidisch mit der Brennstoffversorgungsleitung (40) verbunden ist.

11. Motor nach Anspruch 9 oder 10, wobei das Umgehungsventil (60) geschlossen bleibt, wenn ein Brennstoffdruck stromabwärts der Brennstoffpumpe (44) größer als oder gleich einem Brennstoffdruck stromaufwärts der Brennstoffpumpe (44) ist.

12. Verfahren zum Verhindern von Schäden an einer mechanischen Brennstoffpumpe (44) eines Motors, umfassend:
fluidisches Verbinden einer elektrischen Brennstoffpumpe (42) mit und stromaufwärts von der mechanischen Brennstoffpumpe (44) und fluidisches Verbinden der elektrischen Brennstoffpumpe (42) mit und stromabwärts von einer Brennstoffversorgung (38);
fluidisches Verbinden der mechanischen Brennstoffpumpe (44) stromaufwärts von und mit einer Brennstoffzumessungseinheit (46);
fluidisches Verbinden der Brennstoffzumessungseinheit (46) mit dem Motor;
Bereitstellen einer Umgehungsleitung (62) außerhalb der mechanischen Brennstoffpumpe (44) und in Fluidkommunikation mit einem Einlass (56) und einem Auslass (58) der mechanischen Brennstoffpumpe (44), wobei die Umgehungsleitung (62) dazu konfiguriert ist, von einer nahen Position stromaufwärts von der mechanischen Brennstoffpumpe (44) zu einer nahen Position stromabwärts von der Brennstoffpumpe (44) zu führen;
Bereitstellen eines Einwegumgehungsventils (60) an der Umgehungsleitung (62);
Bereitstellen einer Entlastungsleitung (50) außerhalb der mechanischen Brennstoffpumpe (44) und in Fluidkommunikation mit dem Einlass (56) und dem Auslass (58), wobei die Entlastungsleitung (50) dazu konfiguriert ist, von einer nahen Position stromabwärts von der Brennstoffpumpe (44) zu einer nahen Position stromaufwärts von der Brennstoffpumpe (44) zu führen;
Bereitstellen eines Entlastungsventils (48) an der Entlastungsleitung (50);
wobei die Brennstoffversorgung (38), die elektrische Brennstoffpumpe (42) und die mechanische Brennstoffpumpe (44) fluidisch in Reihe verbunden sind und wobei die mechanische Brennstoffpumpe (44), das Einwegumgehungsventil (60) und das Einwegentlastungsventil (48) fluidisch parallel verbunden sind;
Ermöglichen einer Brennstoffströmung durch die Umgehungsleitung (62), wenn ein Brennstoffdruck an dem Einlass (56) der Brennstoffpumpe (44) größer als ein Brennstoffdruck an dem Auslass (58) der Brennstoffpumpe (44) ist;
Ermöglichen einer Brennstoffströmung durch die Entlastungsleitung (50), wenn ein Brennstoffdruckdifferential zwischen dem Einlass (56) und dem Auslass (58) der mechanischen Brennstoffpumpe (44) größer als ein vorbestimmter Einstellwert ist;
im Wesentlichen Verhindern einer Brennstoffströmung durch die Umgehungsleitung (62), wenn der Brennstoffdruck an dem Einlass (56) der mechanischen Brennstoffpumpe (44) geringer als der Brennstoffdruck an dem Auslass (58) der mechanischen Brennstoffpumpe (44) ist; und
im Wesentlichen Verhindern einer Brennstoffströmung durch die Entlastungsleitung (62), wenn der Brennstoffdruck an dem Auslass (58) der Brennstoffpumpe (44) geringer als der Brennstoffdruck an dem Einlass (56) der Brennstoffpumpe (44) ist.

## Revendications

1. Système de carburant, comprenant :
une alimentation en carburant (38) ;
un conduit d'alimentation en carburant (40) reliant fluidiquement l'alimentation en carburant (38) à un moteur (32) ;
une pompe de carburant mécanique (44) en communication fluidique avec le conduit d'alimentation en carburant (40) ;
un conduit de dérivation (62) extérieur à la pompe de carburant mécanique (44) comprenant une première extrémité (64) reliée fluidiquement au conduit d'alimentation en carburant (40) en amont et à proximité d'une entrée (56) de la mécanique la pompe de carburant (44), et une deuxième extrémité (66) reliée fluidiquement au conduit d'alimentation en carburant (40) en aval et à proximité d'une sortie (58) de la pompe de carburant mécanique (44) ;
une soupape de dérivation (60) située sur le conduit de dérivation (62), la soupape de dérivation (60) étant configurée pour permettre au carburant de s'écouler uniquement de la première extrémité (64) à la deuxième extrémité (66) du conduit de dérivation (62) ;
**caractérisé en ce que** ledit système de carburant comprend en outre :
un conduit de détente (50) extérieur à la pompe de carburant mécanique (44) comprenant une première extrémité (52) reliée fluidiquement au conduit d'alimentation en carburant (40) en aval et à proximité de la sortie (58) de la pompe de carburant mécanique (44), et une deuxième extrémité (54) reliée fluidiquement au conduit d'alimentation en carburant (40) en amont et à proximité de l'entrée (56) de la pompe de carburant mécanique (44) ;
une soupape de détente normalement fermée (48) située sur le conduit de détente (50), la soupape de détente (48) ayant une configuration ouverte pour permettre au carburant de s'écouler uniquement de la première extrémité (52) à la deuxième extrémité (54) du conduit de détente (50) ; et
une pompe de carburant électrique (42), en communication fluidique avec le conduit d'alimentation en carburant (40), en amont de la pompe de carburant mécanique (44) et en aval de l'alimentation en carburant (38), dans lequel l'alimentation en carburant (38), la pompe de carburant électrique (42) et la pompe de carburant mécanique (44) sont reliées fluidiquement en série, et dans lequel la pompe de carburant mécanique (44), la soupape de dérivation (60), et la soupape de détente (48) sont reliées fluidiquement en parallèle.

2. Système de carburant selon la revendication 1, dans lequel la soupape de dérivation (60) s'ouvre lorsque la pression de carburant à l'entrée (56) de la pompe de carburant (44) est supérieure à la pression de carburant à la sortie (58) de la pompe de carburant (44).

3. Système de carburant selon la revendication 1 ou 2, dans lequel la première extrémité (64) du conduit de dérivation (62) est reliée fluidiquement en aval de la pompe de carburant électrique (42).

4. Système de carburant selon la revendication 3, comprenant en outre une unité de mesure de carburant (46) pour la gestion de l'écoulement de carburant vers le moteur (32), l'unité de mesure de carburant (46) étant située sur le conduit d'alimentation en carburant (40) en aval de la pompe de carburant mécanique (44).

5. Système de carburant selon la revendication 4, dans lequel la deuxième extrémité (66) du conduit de dérivation (62) est reliée fluidiquement en amont de l'unité de mesure de carburant (46).

6. Système de carburant selon une quelconque revendication précédente, dans lequel la soupape de dérivation (60) protège la pompe de carburant (44) de l'endommagement provoqué par une pression de carburant à l'entrée (56) de la pompe de carburant (44) supérieure à la pression de carburant à la sortie (52) de la pompe de carburant (44).

7. Système de carburant selon une quelconque revendication précédente, dans lequel la soupape de dérivation (60) empêche la mise sous pression inverse de la pompe de carburant (44).

8. Système de carburant selon une quelconque revendication précédente, dans lequel la soupape de dérivation (60) reste fermée lorsque la pression de carburant à la sortie (52) de la pompe de carburant (44) est supérieure ou égale à la pression de carburant à l'entrée (56) de la pompe de carburant (44).

9. Moteur, comprenant le système de carburant selon une quelconque revendication précédente, dans lequel :
la pompe de carburant (44) dirige un écoulement de carburant vers une section de chambre de combustion du moteur (32) ; et
le conduit de dérivation mène d'une position en amont de la pompe de carburant à une position en aval de la pompe de carburant.

10. Moteur selon la revendication 9, dans lequel le conduit d'alimentation en carburant (40) relie fluidiquement l'alimentation en carburant (38), la pompe de carburant (44) et la section de chambre de combustion en série, et dans lequel le conduit de dérivation (62) est relié fluidiquement au conduit d'alimentation en carburant (40).

11. Moteur selon la revendication 9 ou 10, dans lequel la soupape de dérivation (60) reste fermée lorsqu'une pression de carburant en aval de la pompe de carburant (44) est supérieure ou égale à une pression de carburant en amont de la pompe de carburant (44).

12. Moteur pour empêcher un endommagement d'une pompe de carburant mécanique (44) d'un moteur, comprenant :
la liaison fluidique d'une pompe de carburant électrique (42) à et en amont de la pompe de carburant mécanique (44) et la liaison fluidique de la pompe de carburant électrique (42) à et en aval d'une alimentation en carburant (38) ;
la liaison fluidique de la pompe de carburant mécanique (44) en amont de et à une unité de mesure de carburant (46) ;
la liaison fluidique de l'unité de mesure de carburant (46) au moteur ;
la fourniture d'un conduit de dérivation (62) extérieur à la pompe de carburant mécanique (44) et en communication avec une entrée (56) et une sortie (58) de la pompe de carburant mécanique (44), le conduit de dérivation (62) étant configuré pour mener d'une position proximale en amont de la pompe de carburant mécanique (44) à une position proximale en aval de la pompe de carburant (44) ;
la fourniture d'une soupape de dérivation unidirectionnelle (60) sur le conduit de dérivation (62) ;
la fourniture d'un conduit de détente (50) extérieur à la pompe de carburant mécanique (44) et en communication fluidique avec l'entrée (56) et la sortie (58), le conduit de détente (50) étant configuré pour mener d'une position proximale en aval de la pompe de carburant (44) à une position proximale en amont de la pompe de carburant (44) ;
la fourniture d'une soupape de détente (48) sur le conduit de détente (50) ;
dans lequel l'alimentation en carburant (38), la pompe de carburant électrique (42) et la pompe de carburant mécanique (44) sont reliées fluidiquement en série, et la pompe de carburant mécanique (44), la soupape de dérivation unidirectionnelle (60), et la soupape de détente unidirectionnelle (48) sont reliées fluidiquement en parallèle ;
permettant au carburant de s'écouler à travers le conduit de dérivation (62) lorsqu'une pression de carburant à l'entrée (56) de la pompe de carburant (44) est supérieure à une pression de carburant à la sortie (58) de la pompe de carburant (44) ;
permettant au carburant de s'écouler à travers le conduit de détente (50) lorsqu'un différentiel de pression de carburant entre l'entrée (56) et la sortie (58) de la pompe de carburant mécanique (44) est supérieur à une point de consigne prédéterminé ;
empêchant sensiblement le carburant de s'écouler à travers le conduit de dérivation (62) lorsque la pression de carburant à l'entrée (56) de la pompe de carburant mécanique (44) est inférieure à la pression de carburant à la sortie (58) de la pompe de carburant mécanique (44) ; et
empêchant sensiblement le carburant de s'écouler à travers le conduit de détente (62) lorsque la pression de carburant à la sortie (58) de la pompe de carburant (44) est inférieure à la pression de carburant à l'entrée (56) de la pompe de carburant (44).
